# EUROPEAN PATENT APPLICATION

(11) **EP 2 106 096 A1**
(43) Date of publication of application: **30.09.2009**
(21) Application number: 08251119.7
(22) Date of filing: 27.03.2008
(51) Int. Cl.: H04L 29/08

(54) **Content delivery system**

(71) Applicant: British Telecommunications Public Limited Company, London EC1A 7AJ (GB)
(72) Inventor: The designation of the inventor has not yet been filed
(74) Representative: Nash, Roger William

(57) **Abstract**

A content delivery system is disclosed in which a user device 46 occasionally receives a web feed which indicates a schedule of television and/or radio programmes receivable at the user device. The web feed is customised in accordance with a user profile generated from the user's previous viewing and/or listening habits. In this way, personal video recorders and the like can tune into and record scheduled programmes that are likely to be of interest to a user without requiring the user to pre-select those programmes for recording.

## Description

The present invention relates to a content delivery system.

Currently, information about broadcast TV and radio is provided along with the signals encoding one or more TV and radio channels to a television receiver. Set-top boxes and digital televisions take this TV and Radio programme information and present it to the user via an Electronic Program Guide interface. The user typically interacts with that Electronic Program Guide interface using a remote control.

A separate development has been the rise in the popularity of podcasting over the Internet. The term podcast is commonly associated with the subscription and delivery (via the World Wide Web) of pre-produced content for replay by the user at a later date. It relates to a mechanism by which audio or video files are stored upon a delivery server and advertised to users through the use of an XML based notification file referred to as an RSS feed. In order to access the RSS feed a user connects using a RSS compatible client (often an application program running on the user's personal computer) to a URL relating to the location of the hosted version of the XML file, the application program thereafter controlling the personal computer to access the XML file using the defined URL at set intervals. Any changes made to the XML file are monitored by the client which will attempt to download any content specified within the XML file.

According to a first aspect of the present invention, there is provided a content delivery system comprising:
a web feed generator operable to:
   i) receive a request for said web feed from a user device; and
   ii) responsive to receipt of said request, to select a subset of broadcast programmes from a broadcast programme schedule in dependence upon information included in said request and replying to said request with a web feed including said subset of said broadcast programmes.
a media reception apparatus operable to:
   i) occasionally retrieve said web feed from said web feed generator; and
   ii) to selectively receive one or more broadcast programmes included in said web feed at the scheduled time.

By selecting broadcast programme(s) from a broadcast programme schedule in accordance with information in a web feed request, generating a customised web feed listing the selected broadcast programme(s), and using that customised web feed to tune into the listed programmes, the user can be presented with a customised set of programmes.

Preferably said web feed generator is further operable to receive user history information which indicates media articles and/or broadcast programmes which the user has previously chosen to view or hear and to update the user's profile accordingly.

By updating the user profile in dependence on the user's viewing habits, and applying the updated user profile when responding to a request from a podcast client, the customised web feed is updated to take account of any change in the user's viewing habits.

By way of example only, specific embodiments of the invention will now be described with reference to the accompanying Figures in which:
Figure 1 shows a conventional podcasting system;
Figure 2 is a flow-diagram showing the operation of a conventional podcasting system; and
Figure 3 shows a content delivery system according to a first embodiment of the present invention.

A conventional podcasting system includes conventional server computers 10 which serves content files to a personal computer 12 via the global Internet. There are of course hundreds of millions of personal computers 12 equipped with browser applications which are capable of requesting and downloading content files in this way.

Some personal computers, such as the personal computer 12, are equipped with a media player application which includes the ability to download a web feed file and parse that file in order to automatically download content files listed in the web feed file. Such web feed files are often available from content servers such as the content server 10. In many cases, including the present example, the web feed file which the personal computer media player application is configured to periodically download is hosted on a different computer to the content server 10. Where this is the case, the web feed file can aggregate web feed files from many different content servers 10. Here, an aggregated web feed file is stored on web feed server computer 18.

The format of such files is often in accordance with a standard called Really Simple Syndication 2.0 (the 'syndication' refers to the aggregation of web feeds from different sources). By downloading a web feed file at predetermined intervals, personal computers 12 equipped with such a media player application can find whether the various content servers 10 included in the aggregation have introduced new content in which the personal computer user might be interested. The media player application can then automatically download such content files to the personal computer's hard disk. Once the entire file has been downloaded to the hard disk, the personal computer user can then connect a media player device to his personal computer and copy or stream the downloaded content files to that media player device. Examples of media player devices include portable media player devices 14 - for example the popular iPod from Apple Inc, many mobile phones and also media conversion devices 16 which convert files in a format like MP3 (for audio /music files) or MPEG2 (for video files) into signals which drive existing broadcast media player devices such as radio and television sets. An example of such a media conversion device is a set-top box like Apple Inc's Apple TV which converts downloaded audio and/or video files into signals and inputs those signals to a television set which in turn then plays the audio file through the television's loudspeaker(s) and for video files additionally displays the video on the television's screen.

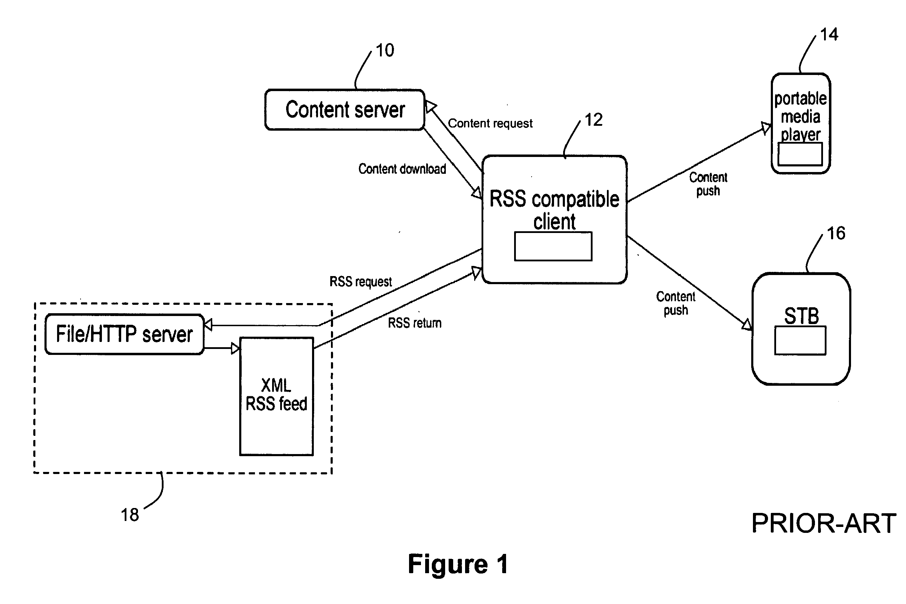

The method used in the system of Figure 1 to publish content is known as podcasting.

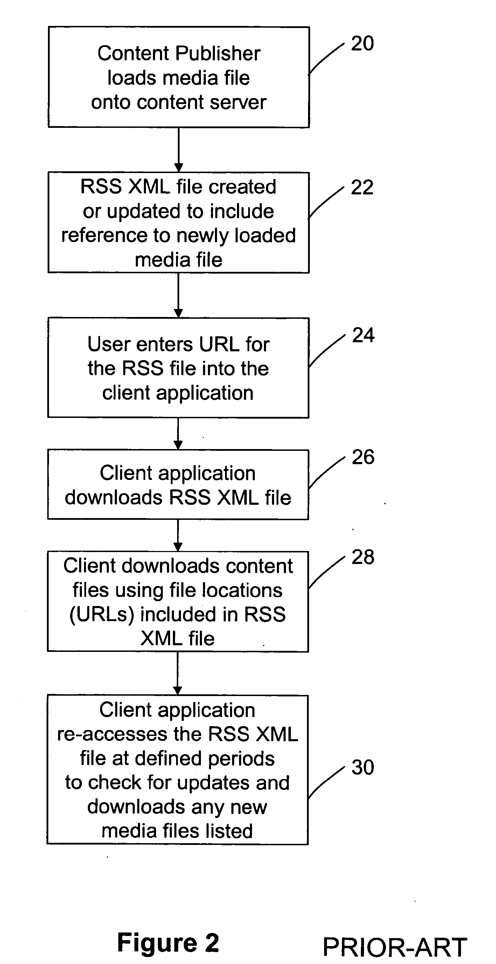

Figure 2 shows the steps involved in conventional podcasting.

Initially, a content publisher stores 20 a media file on content server 10. In order to enable personal computers to download the file, the content publisher publishes 22 a list of URLs which give the address of the newly stored media file, and various details about the media file. Items from that list may then be aggregated into another list featuring contributions from many different publishers. These lists are stored as XML-based RSS files on HTTP server 18. The user of the media player application enters 24 via his personal computer interface the URL of a web feed file which he is interested in. The media player application running on the user's personal computer 12 then downloads 26 the original or aggregated list from the URL entered by the user. If the media player application finds new content files in the list it then downloads 28 the new content files to the personal computer's hard disk from the relevant content server 10. In some cases, only a subset of the new content files are downloaded in accordance with some selection criteria entered by the user, and the various details about the content file included in each item in the list. After the expiry of a set period, the media player application repeats the steps of downloading the aggregated content list and downloading some or all of the content files in that lists which it has not already downloaded.

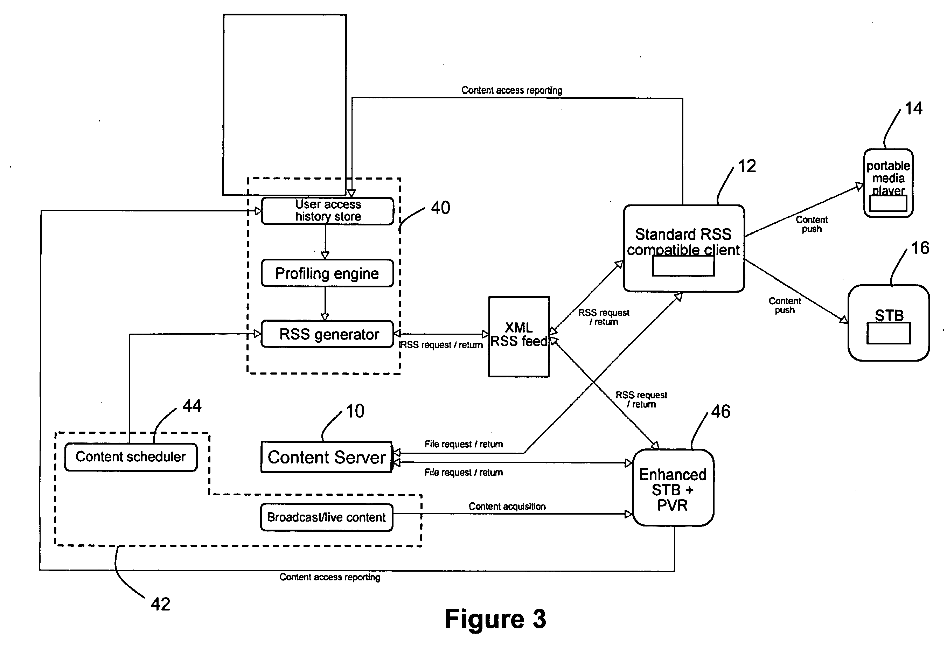

Figure 3 shows a content delivery system according to a first embodiment of the present invention. The portable media player 14, and the media conversion device 16 remain conventional. The media player application on the user's personal computer 12 is augmented by content access reporting software which reports (following user consent) which media files a viewer has chosen to copy to his portable media player 14 or to stream to his media conversion device 16. The reports are made to a personalised web feed server computer 40 via the Internet. Those skilled in the art will have little difficulty in adding such functionality to the media player application.

The personalised web feed server computer 40 also receives user browsing and/or viewing information from other sources. These might include a list of web-pages browsed by a user, supplied by the user's Internet Service Provider following the user's consent to such web-page lists being created.

The set-top box in the present embodiment has both broadcast receiving equipment (e.g. an RF aerial input, or an input from a cable network or a satellite dish) and a connection to the Internet (either via DSL on the user's telephone line, or via a data channel on the cable network). Hence, the user is able to view / hear television and radio programs and also to view / hear video and audio files and streams downloaded from the Internet.

The set-top box has two additional software programs in comparison to conventional set-top boxes.

The first additional software program is content access reporting software which logs broadcast programmes and video and audio files which the user has watched or recorded. The logs are sent via the Internet connection to the personalised web feed server computer 40. Again, the set-top box software requires the user to opt-in to his viewing habits being recorded in this way.

The second additional software program is an augmented Electronic Programme Guide which provides the user with a display of both scheduled broadcast television and radio programmes, scheduled multicasts and the like streamed over the Internet, and also of content files downloadable over the Internet. The Electronic Programme Guide may include only media likely to be of interest to the user, or be tailored in such a way that media likely to be of interest to a user is given higher importance and visibility than other media. This is achieved by the Electronic Programme Guide software downloading, from the personalised web feed server computer 40, a web feed personalised for the user of the set-top box. The generation of the personalised web feed will be described in more detail below. In the present embodiment, the web feed is constructed in accordance with the RSS 2.0 standard, but it will be understood by those skilled in the art that other web feed standards such as Atom might be used instead.

The personalised web feed server computer 40 combines the logs received from the user's various media equipment and stores the combined log in a 'User Access History Store' stored on a persistent storage device available to the personalised web feed server computer 40. This access history allows for detailed profiling about the user's media access behaviours on a number of devices, services, at specific times and locations.

The data in the user access history store is provided to software known as a 'profiling engine' running on the computer 40. The Profiling Engine could take a number of forms but in this instance works as a personalisation and recommendation system using the user viewing history information stored within the User Access History Store as part of a collaborative filtering process (or similar) to generate a profile for the user.

A broadcaster 42 broadcasts television and radio programs using broadcast equipment including television and radio transmitters, satellites and cable networks. The television and radio signals, which may be analogue or digital, are broadcast across a region in accordance with a predetermined schedule.

In the present embodiment, the broadcaster makes available its schedule from a content schedule server 44. This might for example be made available in the TV-Anytime format. The British Broadcasting Corporation (the BBC) for example makes its daily programme schedules available in this format from http://backstage.bbc.co.uk/feeds/tvradio/.

Other broadcasters might also send their schedule data to the profiling computer 40. As in conventional system, those publishing content via the Internet might also supply web feeds describing content available on their servers to the personalised web feed server computer 40. In addition to downloadable content, these might include scheduled multicasts of significant events (e.g. space shuttle launches) and the like.

The static XML based RSS file used in a conventional podcast service is replaced in this embodiment with a software component running on the personalised web feed server computer 40 referred to as the "RSS generator" object. This object generates a personalised RSS feed dynamically in response to a request made by the RSS client such as a conventional media player application running on a personal computer 12 or the personalised Electronic Programme Guide software running on the user's set-top box.

The RSS feeds from the RSS Generator can be both content/channel specific as well as time, location, client, & user specific as they are generated dynamically for each client request and as such can be fully tailored for the requesting client.

The RSS feeds generated in this embodiment additionally support the delivery of broadcast and live content together with pre-produced content and support a number of delivery techniques.

The interaction between the RSS Client and the RSS Generator takes the form of a simple HTTP request. In order to perform the HTTP request the client has been configured to make the request using a specific URL - in a normal podcast service this URL would relate to the address of the static XML file stored on the web server - however in this case the URL is structured to include not only the address of the RSS Generator but to also include a unique identifier relating to both the client and the user making the request. An additional optional identifier covering the final viewing device type can also be included in the request in order to ensure only content compatible with the final viewing device (14, 16) is included as part of the returned RSS feed.

The unique identifier(s) are then used by the RSS Generator to match the incoming request to a specific user profile enabling the generation of the correct matching details for the requesting user and client.

Upon generation of the customised RSS feed (customised for the user, possibly additionally customised in dependence on the user's viewing habits at this location, or at this time of day, or using this device), the RSS generator sends a response to the client request in a standard XML based format as per the RSS format specifications. This RSS feed combines both the standard podcast elements used for downloads based file delivery together with additional elements compatible with an enhanced client - such as the set-top box 46 - enabling the delivery of broadcast and non-file based content to the enhanced device. The formatting of the RSS feed means that full compatibility is kept with conventional podcast clients which simply ignore the enhanced content details.

The RSS generator is provided with user profile information by the Profiling Engine together with schedule information from one or more broadcasters and content directory information from one or more web-based publishers. The RSS Generator thus delivers very precisely tailored podcast feeds to the RSS client for specific users and viewing devices. In situations where the viewing device is not known, the backwards compatibility of the RSS enhanced data elements guarantees that a basic level of operation is always offered to non enhanced client services.

An example of such a personalised web feed is given below:

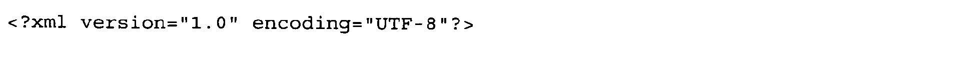

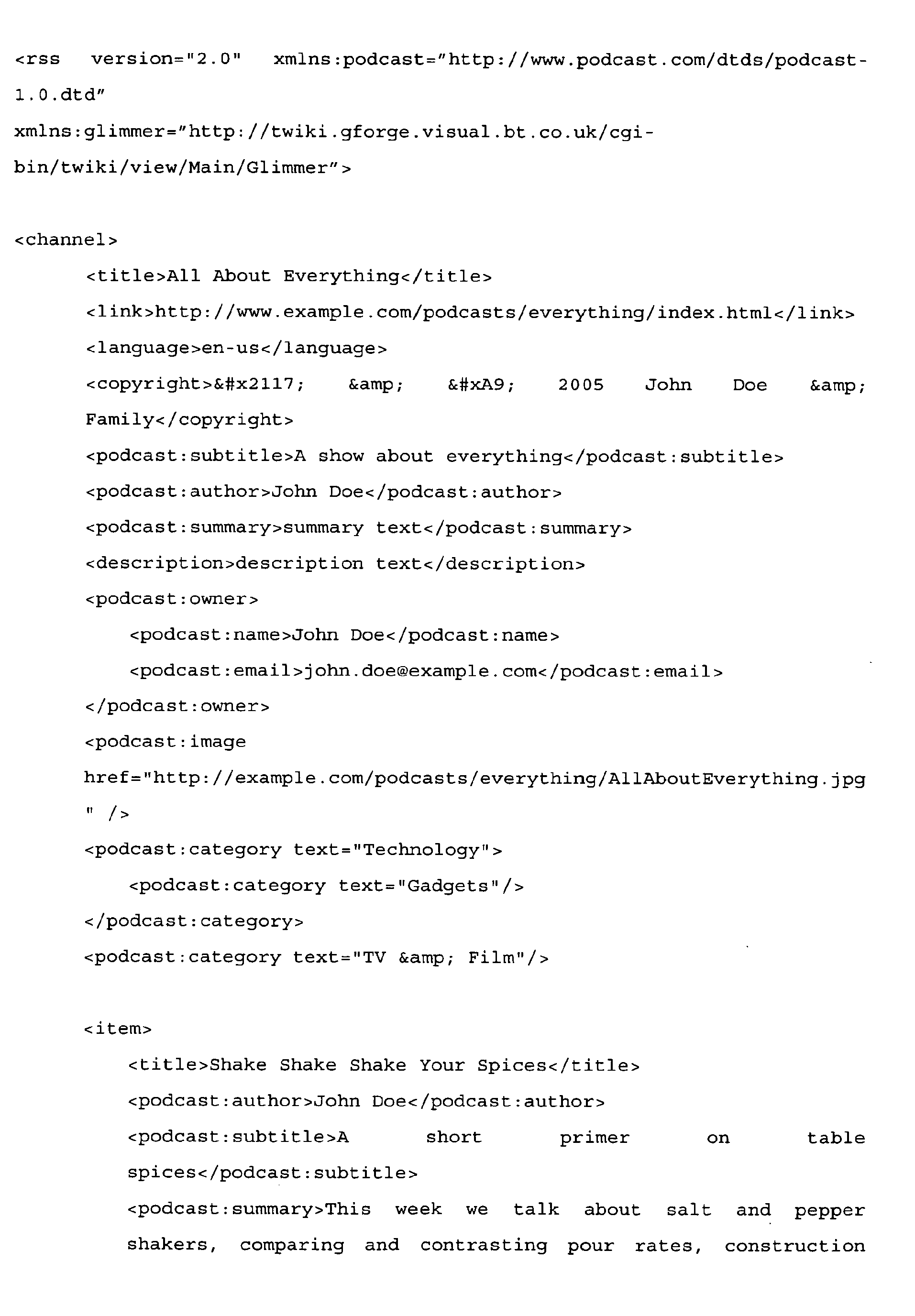

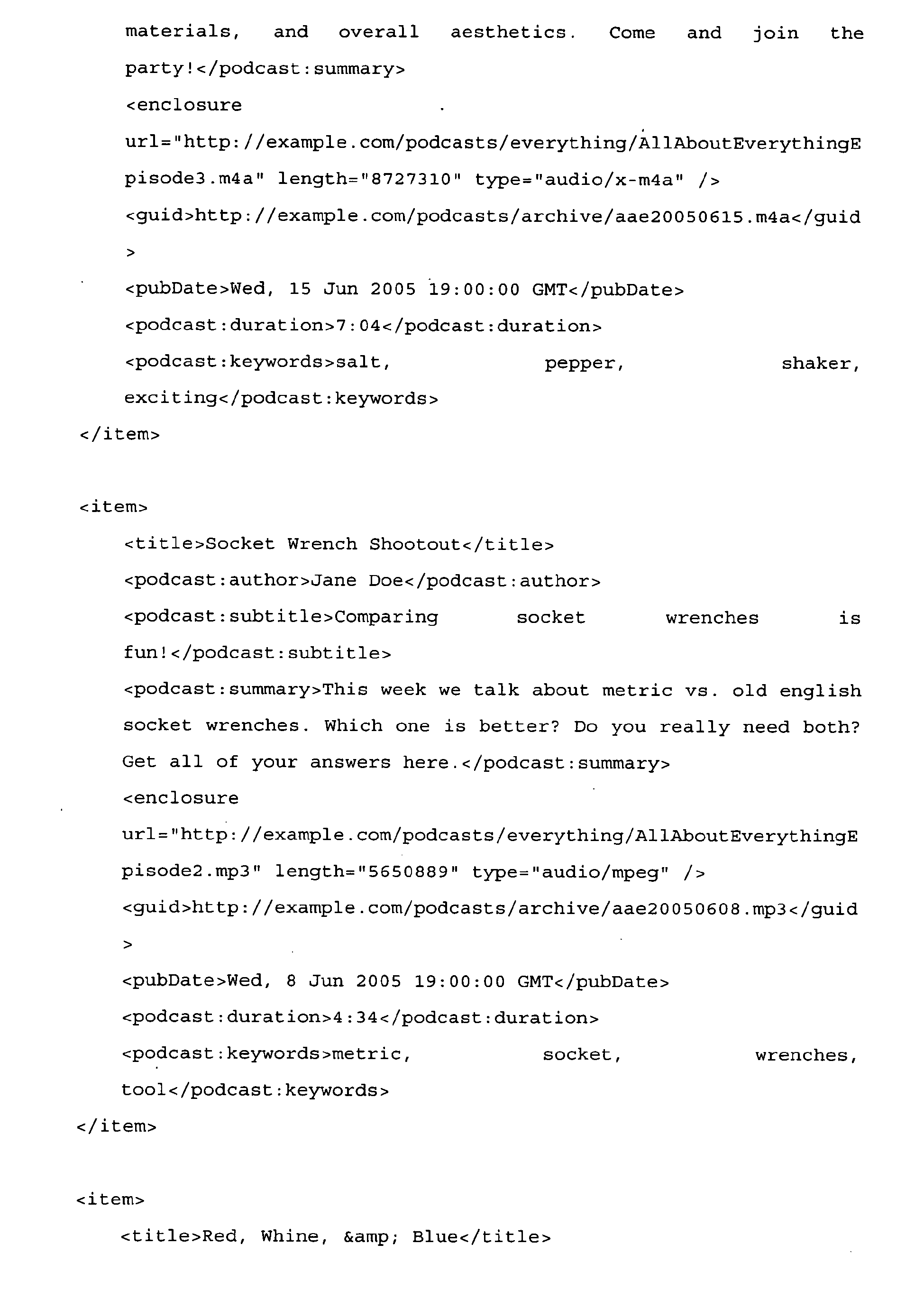

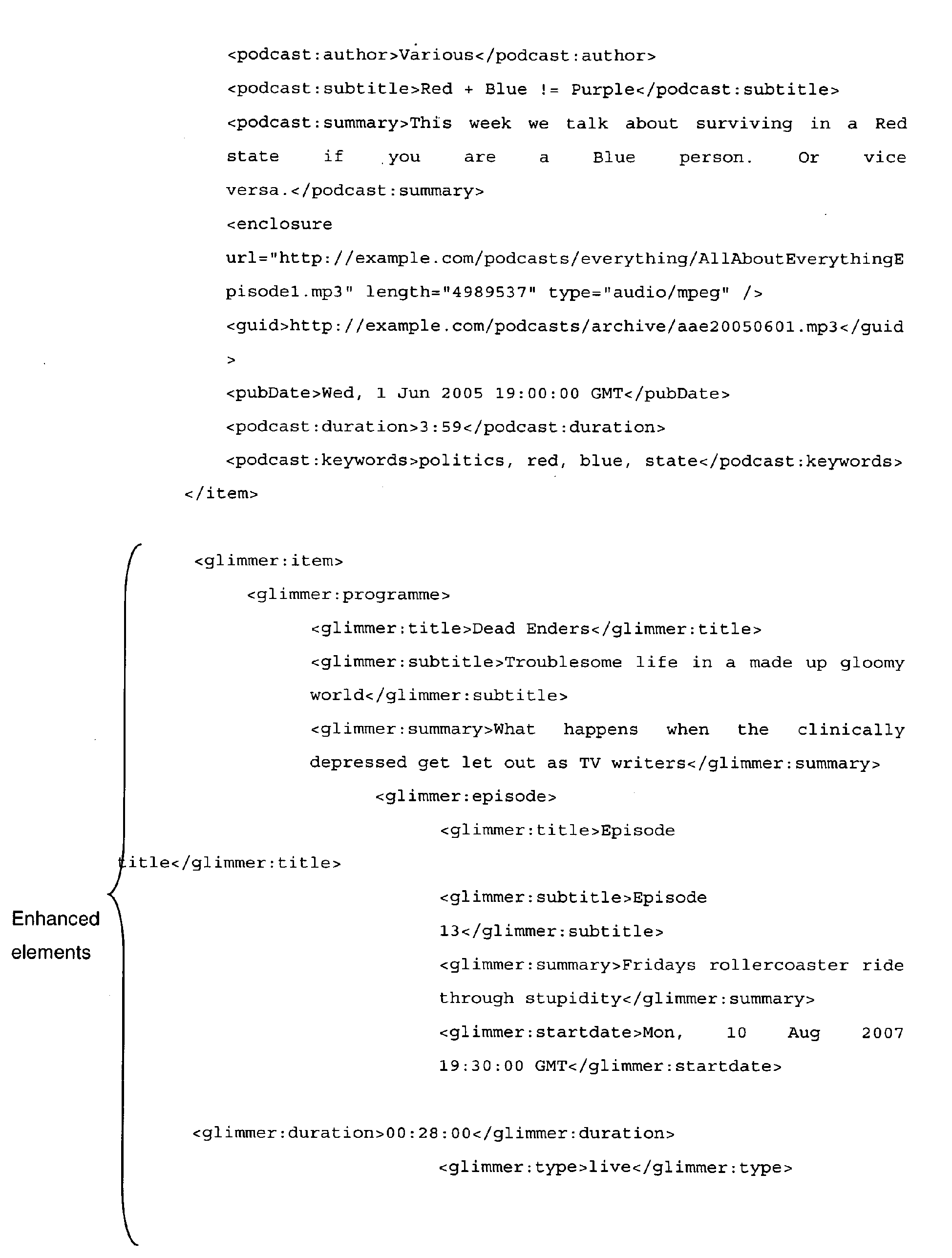

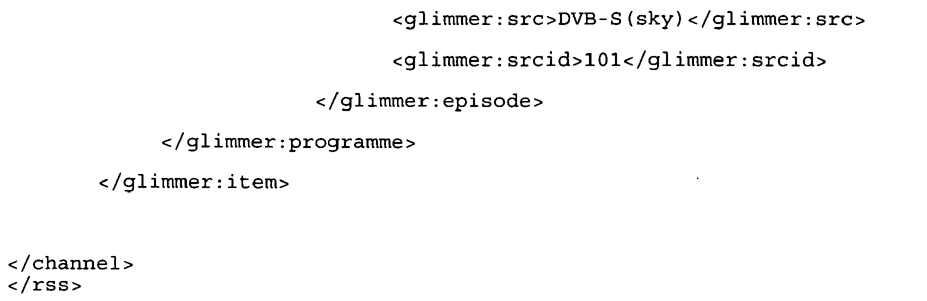

It will be seen that the above RSS2.0 formatted XML file is used to deliver both the information covering downloads based content and content which is delivered through another means to an enhanced client device such as the set-top box 46. In the format described above the enhanced RSS file includes both the standard "<item>" tags associated with a standard podcast in addition to a new set of tags "<glimmer:item>" which provide the additional real time content support of this embodiment.

The tags are formatted using the existing support within RSS for unique namespaces and as such the web feed remains completely compatible with the current RSS 2.0 standard.

The enhanced tags provide two types of data to the client device, data associated with describing the contents of the content such as "title", "description" etc, and data covering the technical details associated with the delivery/reception of the content. Delivery information includes details of the contents source location, type, availability, and client handling method etc.

In the present embodiment, the following content types are handled by the enhanced client in the following ways: -

Standard RSS items - Downloaded using the existing HTTP podcast process.
Live - Content delivered as a real time feed/stream which is made available to the user during its transmission window.
Store - Content which is delivered as a file and is stored on the client device for viewing at a later time.
PVR - Content delivered as per live content but which is also recorded/stored on the client for later use, or for time shifting within the live transmission window.

The content types as described above and as used in the present embodiment support the following delivery techniques: -
Live - Unicast IP, Multicast IP, Broadcast (Analogue, DVB-T, DVB-S, DAB)
Store - Unicast IP, Multicast IP, DVB-S2
PVR - Unicast IP, Multicast IP, Broadcast (Analogue, DVB-T, DVB-S, DAB)

This combination of standard podcast elements together with the enhanced elements offers at the same time complete compatibility with existing podcast RSS clients whilst enabling enhanced clients to support full off line and realtime content services such as existing broadcast TV channels.

This extension of delivery and content type support enables the use of web feeds - for example RSS - to deliver a full media content system able of supporting broadcast audio and video, On-demand, pre-emptive download, and user initiated download services.

To summarise the above, a content delivery system is disclosed in which a user device occasionally receives a web feed which indicates a schedule of television and/or radio programmes receivable at the user device. The web feed is customised in accordance with a user profile generated from the user's previous viewing and/or listening habits. In this way, personal video recorders and the like can tune into and record scheduled programmes that are likely to be of interest to a user without requiring the user to preselect those programmes for recording.

## Claims

1. A content delivery system comprising:
a web feed generator operable to:
i) receive a request for said web feed from a user device; and
ii) responsive to receipt of said request, to select a subset of broadcast programmes from a broadcast programme schedule in dependence upon information included in said request and replying to said request with a web feed including said subset of said broadcast programmes.
a media reception apparatus operable to:
i) occasionally retrieve said web feed from said web feed generator; and
ii) to selectively receive one or more broadcast programmes included in said web feed at the scheduled time.

2. A content delivery system according to claim 1 wherein said request identifies the user of the device and web feed generator selects said subset of broadcast programmes in dependence upon a user profile associated with said user.

3. A content delivery system according to claim 1 wherein said request identifies the type of device from which the request was received, and said web feed generator selects said subset of broadcast programmes in dependence upon the type of device from which the request was received.

4. A content delivery system according to any preceding claim further comprising a broadcast programme schedule source, said web feed generator being further operable to receive said broadcast programme schedule from said broadcast programme schedule source.

5. A content delivery system according to any preceding claim wherein said web feed generator is further operable to select a subset of media articles downloadable by the user device and to reply to said request with a web feed including said subset of media articles as well as said subset of said broadcast programmes.

6. A content delivery system according to claim 1 wherein said web feed generator is further operable to receive user history information which indicates media articles and/or broadcast programmes which the user has previously chosen to view or hear.

7. A content delivery system according to claim 6 wherein said media reception apparatus is further operable to indicate to said web feed generator media articles and/or broadcast programmes which the user has previously chosen to view or hear.

8. A media reception apparatus operable to:
i) occasionally receive a web feed from a web feed generator; and
ii) to selectively receive one or more broadcast programmes included in said web feed at the scheduled time.

9. A method of selectively receiving one or more broadcast programmes at a media reception apparatus, said method comprising:
i) occasionally receiving a web feed from a web feed generator; and
ii) selectively receiving one or more broadcast programmes included in said web feed at the scheduled time.

10. A web feed generator computer operable to:
i) receive a request for said web feed from a user device; and
ii) responsive to receipt of said request, to select a subset of broadcast programmes from a broadcast programme schedule in dependence upon information included in said request and replying to said request with a web feed including said subset of said broadcast programmes.

11. A method of operating a computer to generate a web feed, said method comprising:
i) receiving a request for said web feed from a user device; and
ii) responsive to receipt of said request, selecting a subset of broadcast programmes from a broadcast programme schedule in dependence upon information included in said request and replying to said request with a web feed including said subset of said broadcast programmes.

12. A computer program which, when run on a computer, carries out the method of claim 11.

13. A computer readable medium storing a computer program according to claim 12.
